# FASCICULE DE BREVET EUROPEEN

(11) **EP 0 565 397 B1**
(45) Date de publication et mention de la délivrance du brevet: **11.06.1997**
(21) Numéro de dépôt: 93400776.6
(22) Date de dépôt: 25.03.1993
(51) Int. Cl.: F16L 47/02, B29C 65/34, H05B 3/58

(54) **Procédé pour réaliser une résistance de chauffage sous la forme d'un filet, un filet obtenu par la mise en oeuvre du procédé, son application au soudage de tubes aboutés et au raccordement transversal de canalisations, ensembles ainsi et prise de branchement électrosoudable ainsi équipée**
Verfahren zur Herstellung eines Widerstandes zum Verschweissen in Form eines Netzes, eine mit diesem Verfahren hergestellter Widerstand für das Zusammenfügen paralleller oder transversaler Kunststoffröhren und damit ausgerüstete Rohrverzweigung
Method of manufacturing a welding resistor in the form of a net, a resistor obtained by this method for joining parallel or transversal thermoplastic tubes and tube branching device equipped with such a heating unit

(30) Priorité: 10.04.1992 FR 9204415
(43) Date de publication de la demande: 13.10.1993
(73) Titulaire: GAZ DE FRANCE (SERVICE NATIONAL), F-75017 Paris (FR)
(72) Inventeur: Brunet, Martine, F-95410 Groslay (FR); Dufour, Denis, F-95130 Franconville (FR)
(74) Mandataire: Lerner, François

(56) Documents cités:
- EP-A- 0 069 020
- EP-A- 0 145 581
- EP-A- 0 160 536
- EP-A- 0 170 844
- EP-A- 0 184 658
- DE-A- 3 939 570
- GB-A- 2 136 074
- GB-A- 2 137 297
- PATENT ABSTRACTS OF JAPAN vol. 15, no. 232 (M-1124)13 Juin 1991 & JP-A-30 71 824 (DAINIPPON PLASTICS CO LTD) 27 Mars 1991
- PATENT ABSTRACTS OF JAPAN vol. 15, no. 6 (M-1066)8 Janvier 1991 & JP-A-22 56 997 ( OSAKA GAS CO LTD) 17 Octobre 1990
- DATABASE WPIL Section Ch, Week 9011, Derwent Publications Ltd., London, GB; Class A, AN 90-078618

## Description

L'invention se rapporte d'une façon générale à la réalisation des résistances électriques utilisées pour le soudage, ou plus particulièrement pour l'électrosoudage, de pièces entre elles, et tout particulièrement de pièces en matière plastique ou thermoplastique.

Dans la technique, et en particulier à partir du brevet FR-A- 2 654 978, on sait déjà qu'il est possible d'utiliser, dans le domaine, des résistances se présentant sous la forme d'un réseau maillé constituant un filet électriquement conducteur s'étendant, avec une continuité électrique, d'une extrémité à une extrémité opposée de ce filet.

Pour réaliser le soudage, le filet est placé à l'endroit de la zone de soudage des pièces, et est raccordé, via des bornes de raccordement, à une source électrique de puissance destinée à faire circuler dans la résistance un courant d'une intensité suffisante pour élever la température de la partie environnante de ces pièces jusqu'à une température déterminée correspondant à leur température de fusion, assurant ainsi leur cohésion sous pression puis leur soudage, après arrêt de l'alimentation en courant et refroidissement.

Dans la publication susmentionnée FR-A- 2 654 978, le filet résistif est tout particulièrement destiné à l'électrosoudage de tubes en matière thermoplastique utilisés dans l'industrie gazière et réunis par une pièce de raccordement en matière compatible, qu'il s'agisse d'un manchon pour la réunion de deux canalisations coaxiales, ou d'une selle de jonction (appelée aussi prise de branchement) pour des branchements ou des piquages transversaux, par exemple en "T".

Le raccordement soudé de deux canalisations coaxiales par un manchon à filet chauffant ne pose pratiquement pas de problème de principe, ledit filet pouvant en particulier se présenter comme un tronçon de cylindre noyé à proximité de la paroi intérieure de surface du manchon, avec son axe de cylindre sensiblement confondu avec celui du manchon (lequel est habituellement également sensiblement cylindrique).

Il s'est par contre avéré que des améliorations pouvaient être encore apportées lorsque le filet chauffant équipe une prise de branchement pour le raccordement transversal d'une canalisation à une autre.

Pour la bonne compréhension du problème posé, rappelons brièvement la possible constitution d'une telle "prise" dont on peut trouver deux exemples de réalisation : dans la publication susmentionnée et par exemple au brevet US-A-4 684 417.

Habituellement, ces prises généralement en matière thermoplastique comprennent une partie ou corps en forme de selle venant chevaucher assez étroitement la canalisation sur laquelle doit être effectué le piquage transversal.

Du côté de la surface extérieure convexe de la selle, se dresse un fût traversé, de même que le corps de la prise, par un passage pouvant lui-même être raccordé à un canal de dérivation transversal.

Une fois la prise de branchement soudée par dessus le tronçon de canalisation, la paroi de cette dernière est percée, au moyen d'un perforateur-obturateur se déplaçant dans le passage du fût, après quoi le perforateur est retiré ou relevé dans ledit passage, au-delà de sa communication avec le canal de dérivation sur lequel a pu être préalablement installée la conduite de raccordement, laquelle peut ainsi communiquer avec la canalisation, via le perçage transversal qui a été ménagé.

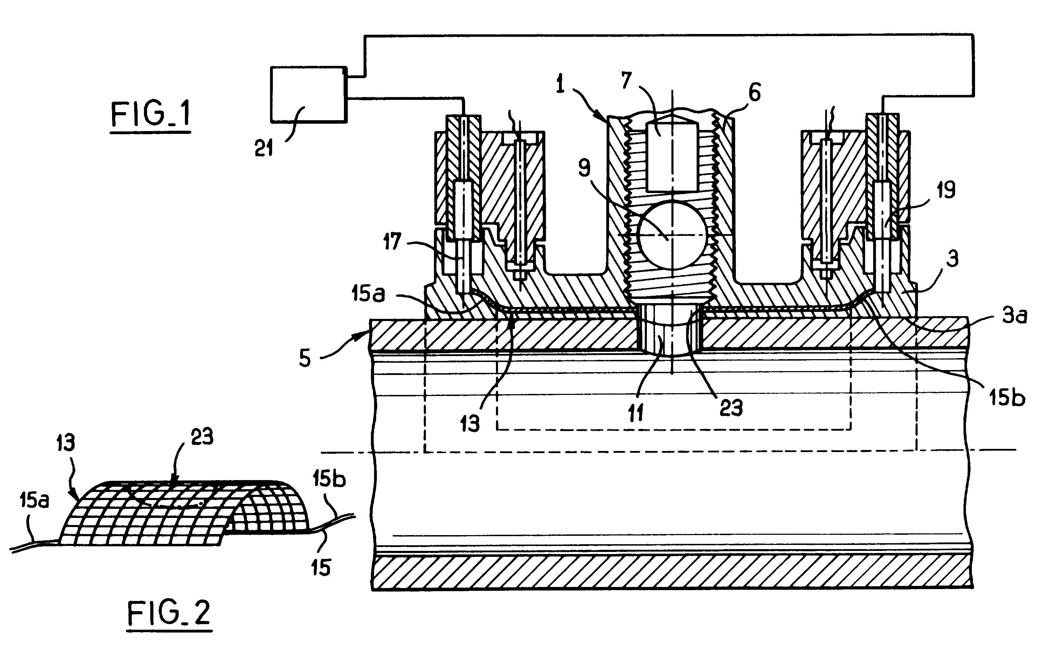

En fait, un problème peut se poser lors du perçage ou après celui-ci dans le cas où l'on a utilisé un filet chauffant pour thermosouder la prise et la canalisation, comme on va le comprendre ci-après en référence aux figures 1 à 2 annexées qui illustrent l'art antérieur.

Sur la figure 1 tout d'abord, on retrouve ainsi une prise de branchement 1 avec sa selle de raccordement 3 chevauchant une canalisation 5 dans laquelle on peut par exemple prévoir de faire circuler un fluide sous pression tel que du gaz.

Extérieurement, au-dessus de la selle, se dresse le fût 6 de la prise avec son passage intérieur vertical 7 à un niveau intermédiaire duquel débouche le canal de dérivation transversal 9 qui communique ici avec le volume intérieur de la canalisation, via le perçage 11 qui a été ménagé dans la paroi de cette dernière par le perforateur-obturateur (non représenté).

Pour réaliser le perçage transversal 11, le perforateur a dû percer, pour la traverser, la résistance de soudage 13, ici noyée dans le corps de la selle 3, à proximité immédiate de sa surface intérieure concave sensiblement en portion de cylindre repérée 3a.

Sur la figure 2, on a illustré, en trait plein, la forme sensiblement hémi-cylindrique de la résistance 13, avant intervention du perforateur.

On remarque ainsi que cette résistance se présente comme un filet maillé à fil(s) 15 électriquement conducteur s'étendant continûment entre ses deux extrémités opposées 15a, 15b. Pour le soudage de la selle et de la canalisation, ces extrémités 15a, 15b, sont habituellement raccordées chacune à une borne de connexion (telles que 17, 19), elles-mêmes connectées à une source de puissance, telle qu'un générateur de courant continu, schématisé en 21 (et équipé bien entendu de tous les dispositifs nécessaires pour alimenter de façon convenable et pendant la durée choisie cette résistance).

Ainsi, au moment du soudage, et tant que le perforateur n'a pas agi, le filet résistif 13 est-il dépourvu d'orifice le traversant, avec pour avantage qu'au moment du soudage, il présente toujours sa continuité électrique entre ses extrémités de fil 15a, 15b.

Par contre, une fois que le perforateur a réalisé le perçage 11, le filet présente alors nécessairement un trou ménagé dans l'axe du perforateur et du perçage, un tel trou ayant été schématisé en 23 et délimité par des traits mixtes sur la figure 2.

Le filet ne présente plus alors sa continuité électrique.

De surcroît, il a fallu exercer un effort supplémentaire sur le perforateur pour traverser le filet, au risque de tirer certains tronçons de fil(s) en induisant des passages potentiels pour des fuites.

En outre, il s'est avéré que les opérations de vérification de l'étanchéité des jonctions entre les prises et les canalisations étaient rendues plus délicates de par la présence d'une portion de filet dans l'axe du passage 7 par lequel l'opérateur conduit certaines de ces opérations avant perçage du trou 11.

Toujours dans le cadre du raccordement transversal en particulier de tubes, il a également déjà été proposé d'utiliser un anneau ou une collerette en matière plastique intégrant une résistance le plus souvent spiralée, mais pouvant parfois prendre une configuration ondulée (voir notamment la publication JP A-3071824 et JP A-2256997).

Toutefois, même si grâce à une telle pièce plastique en couronne, on peut conserver une continuité électrique à la résistance, cette solution oblige à fabriquer une pièce supplémentaire (la couronne) avec les étapes correspondantes de mise en place et de contrôle de la résistance qui doit y être noyée. Le surcoût sera d'ailleurs en fait d'autant plus important qu'il faudra prévoir pratiquement autant de couronnes de dimensions différentes qu'il peut y avoir de diamètres d'orifices de raccordement à percer, voire de diamètres de tubes.

Un inconvénient comparable résulte de EP-0 170 844 qui enseigne de réaliser une collerette avec un trou central et une continuité électrique dans tout son réseau, à partir d'un fil agencé en zigzag. Une telle structure parait en outre peu adaptée au raccordement bout à bout de deux canalisations.

L'invention vise à résoudre toutes ces difficultés propres à l'art antérieur en proposant une solution qui soit économique, applicable pratiquement à tout type de pièces de raccordement et de tubes, quels que soient leurs diamètres et ceux des orifices à percer et que la liaison s'effectue bout à bout ou transversalement, en assurant une continuité électrique en permanence dans toute la résistance et une très bonne homogénéité de chauffage autour de son emplacement d'implantation.

C'est pourquoi, une première caractéristique importante de cette invention consiste à proposer un procédé pour réaliser une résistance de chauffage sous la forme d'un filet à fil(s) électriquement conducteur(s) pour le soudage entre eux d'éléments en matière plastique, ce filet présentant une forme aplatie sensiblement en collerette réservant à l'intérieur un orifice, avec une continuité électrique dans tout le filet, le procédé comprenant les étapes suivantes :
- obtention du filet sous la forme d'une bande ayant une longueur et une largeur données ou d'un tronçon de tube cylindrique présentant un axe, et
- pliage, soit de la bande en l'enroulant sur elle-même, soit du tronçon en l'écrasant sur lui-même suivant son axe de cylindre, jusqu'à obtenir ladite forme du filet en collerette aplatie avec son orifice.

De cette façon, le filet ainsi constitué (avec son orifice prédéfini) présentera une fois pour toute une continuité électrique sur tout son réseau.

En particulier, la section de l'orifice pourra être adaptée à celle du perforateur dans le cas d'une application de l'invention au thermosoudage d'une prise de branchement et d'une canalisation.

De préférence, et selon l'invention, le filet obtenu par ce procédé sera constitué d'un seul fil pouvant être à un ou plusieurs brins réunis, ledit fil étant avantageusement protégé par une gaine extérieure.

De surcroît, une "zone froide", (c'est-à-dire non ou peu chauffée lors du passage du courant), sera naturellement créée à l'endroit de l'orifice ainsi ménagé dans le filet à qui l'on pourra aisément donner la forme voulue avec des diamètres externe et interne facilement ajustables, de par la souplesse du filet et le caractère assez aisément déformable de ses mailles, permettant notamment d'adapter un tel filet à d'autres applications qu'au thermosoudage d'une prise de branchement.

Ainsi, on peut en particulier envisager d'appliquer l'invention au soudage bout à bout de deux tubes, en remplaçant les moyens de chauffage actuellement utilisés (en général un miroir chauffant) par la résistance de l'invention dont l'orifice "central" aura bien entendu été de préférence et préalablement adapté aux diamètres intérieur et extérieur des canalisations à raccorder.

L'invention concerne, outre le filet et son procédé d'obtention, l'utilisation d'un tel filet pour l'électrosoudage de deux tubes bout à bout, selon la revendication 4, un ensemble comprenant le filet et deux tubes soudés bout à bout selon la revendication 5, un ensemble comportant une prise de branchement et une résistance de chauffage correspondant audit filet, selon la revendication 6, ainsi qu'une prise de branchement comportant cette résistance de chauffage en filet, selon la revendication 7.

Une description plus détaillée de cette invention va maintenant être faite, en référence pour cela aux dessins annexés donnés uniquement à titre d'exemples non limitatifs de réalisation et dans lesquels :
Les figures 1 et 2 susmentionnées présentent respectivement une application et une réalisation d'un filet résistif tel qu'utilisé dans l'art antérieur,
la figure 3 montre un premier exemple de réalisation d'un filet résistif conforme à l'invention,
la figure 4 illustre en vue locale agrandie une constitution possible de quelques mailles du filet de la figure 3, selon le détail repéré IV sur cette figure,
la figure 5 illustre en coupe la réalisation du fil de la structure de cette même figure 3, selon le détail repéré V sur cette figure,
la figure 6 illustre une variante de réalisation du fil de la figure 5,
les figures 7A, 7B et 7C d'une part, et les figures 8A et 8B d'autre part, montrent en quelques étapes deux principes possible de réalisation de la structure en filet de la figure 3,
les figures 9 et 10 montrent deux variantes d'un tel filet,
la figure 11 illustre schématiquement le principe d'application du filet de l'invention dans le cadre du soudage bout à bout de deux tubes,
la figure 12 montre en perspective la conformation cintrée du filet lorsque l'on veut l'utiliser sur une prise de branchement,
la figure 13 illustrant d'ailleurs un tel exemple d'application.

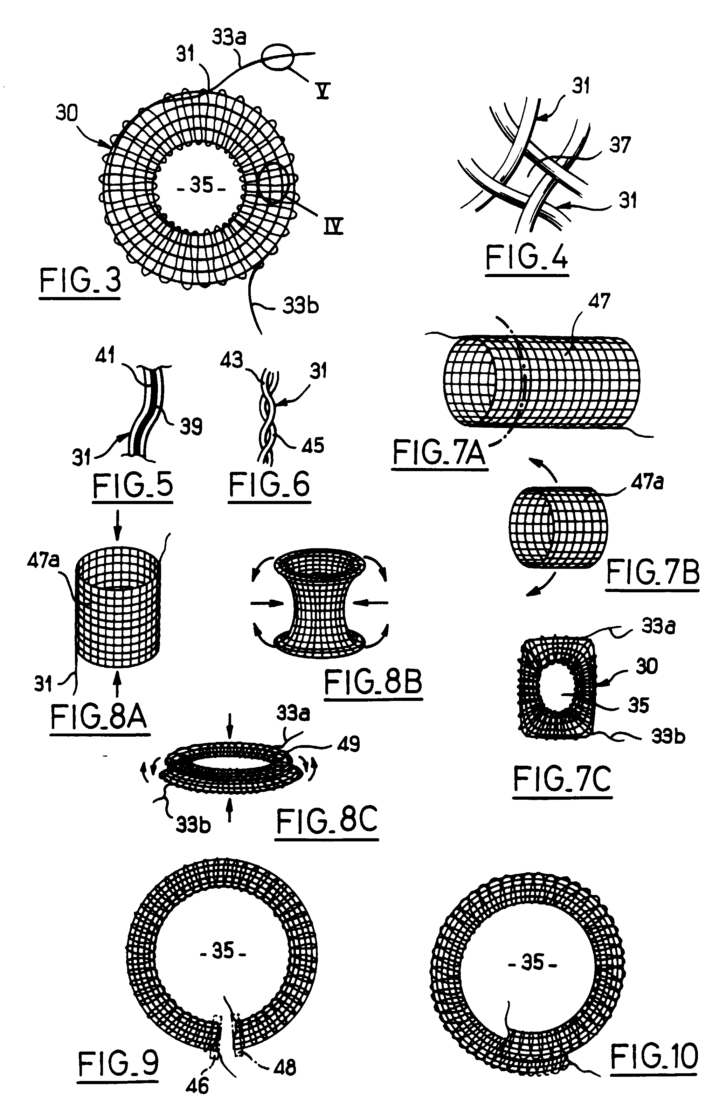

Sur la figure 3 tout d'abord, on voit donc clairement illustré la forme en collerette du filet résistif de l'invention ici repéré dans son ensemble 30.

En l'espèce, ce réseau est constitué d'un fil électriquement conducteur unique 31 s'étendant continûment entre ses deux extrémités 33a, 33b, ce fil ayant été en quelque sorte "tricoté", comme on tricote par exemple une chaussette, de manière à réaliser cette forme en couronne ou collerette aplatie délimitant un orifice traversant 35.

Sur la figure 4, on peut voir que le filet pourra notamment, pour sa tenue mécanique, être tel que les tronçons du fil se chevaucheront ou s'entrelaceront, par exemple dessus/dessous à chaque intersection, en délimitant ainsi au fur et à mesure une série de mailles, telles que 37, de dimensions adaptées.

Mais on pourrait également imaginer qu'à chaque croisement, le fil présente des boucles ou des noeuds.

Compte tenu de l'application privilégiée (mais non exclusive) du réseau de l'invention au domaine de l'électrosoudage, le fil 31 pourra être réalisé à partir d'un unique brin électriquement conducteur, par exemple en cuivre, repéré 39 sur la figure 5 enrobé d'une gaine ou pellicule 41 en un matériau thermiquement conducteur mais électriquement isolant, pouvant par exemple permettre à la gaine de garder ses caractéristiques jusqu'à une température de l'ordre de 300 à 350 °C.

La gaine fondra ou se ramollira ainsi lorsque la température optimale de chauffage de la résistance devant conduire à une bonne qualité de soudage entre les pièces sera atteinte. On pourra notamment prévoir de réaliser cette gaine en une matière polymère de préférence thermoplastique ou thermodurcissable, et par exemple, en un mélange à base de polyesterimide.

Mais au lieu d'un tel fil gainé à brin conducteur unique, on pourrait aussi utilisé un fil à brins multiples, repérés 43, 45 sur la figure 6, et par exemple enroulés sur eux-mêmes ou torsadés de manière que le filet ne soit toujours globalement réalisé que par un seul fil continu, le nombre des brins constituant ce fil dépendant finalement de l'application choisie.

Il doit être clair que si le fil est constitué de plusieurs brins torsadés, on pourra soit prévoir une gaine isolante pour chaque brin, soit enrober l'ensemble des brins isolés dans une seule et même gaine. On pourrait également envisager, en alternative, plusieurs brins isolés accolés en un ruban (variante non représentée), voire réaliser un filet avec plusieurs fils (même si cette version paraît a priori moins intéressante compte tenu des problèmes qui pourraient se poser de raccordement des fils avec les bornes ou cordons d'alimentation extérieurs, pouvant nécessiter la présence de barettes de raccordement réunissant les fils à leurs extrémités, de telles barettes ayant été schématisées en traits fantômes 46, 48 sur la version de la figure 9).

Sur les figures 7A à 7C, on a cherché à montrer une première possibilité de réalisation du filet en collerette de l'invention.

En l'espèce, on est ici parti d'un filet tubulaire sensiblement cylindrique 47 (bien entendu à fil unique) comme on en trouve par exemple une illustration sur la première figure de la publication susmentionnée FR-A-2 654 978, un tel filet ayant par exemple pu être "tricoté" autour d'un mandrin cylindrique.

Une fois un tel filet en main, on va venir le couper à longueur, de manière à obtenir un tronçon de cylindre tubulaire tel que repéré 47a sur la figure 7B.

Il suffira alors d'aplatir ce tronçon en tirant ses bords vers l'extérieur, comme l'indique les flèches de la figure 7B, jusqu'à obtenir la forme en collerette aplatie de la figure 7C où l'on peut reconnaître le filet 30 de la figure 3.

Il doit être clair qu'une collerette ainsi formée, si elle s'apparente à un anneau ou une couronne plus ou moins plate ne sera pas nécessairement limitée intérieurement et extérieurement par deux cercles concentriques.

En fait, tout dépendera du caractère extensible des mailles du filet et de l'importance et des endroits où l'on sera venu déformer le filet pour l'aplatir.

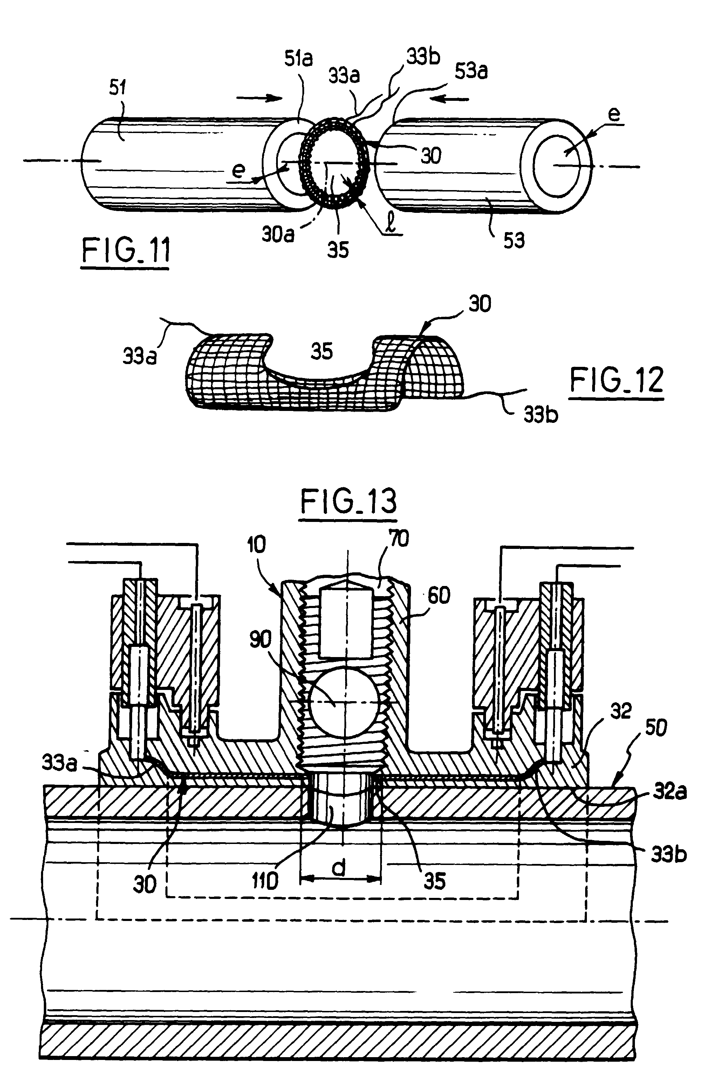

C'est d'ailleurs pour cela que sur la figure 7C on a représenté le filet avec ses bords extérieurs sensiblement en carré, cette forme ayant d'ailleurs été reprise sur la figure 12, l'orifice central 35 ayant par contre dans cet exemple été maintenu sensiblement circulaire.

Les figures 8A à 8C présentent un autre mode de réalisation.

Dans ce cas, partant toujours d'un tronçon de cylindre 47a, on vient, dans un mouvement de retournement, déformer vers l'extérieur les deux extrémités opposées du tronçon de cylindre que l'on écrase sur lui-même vers sa zone centrale à la manière d'un accordéon jusqu'à obtenir une collerette en double couronne repérée 49 sur la figure 8C.

Avec de tels modes de réalisation, on va nécessairement obtenir des formes à contour totalement fermé.

Pour s'approcher de telles formes, on pourrait également partir d'un filet en bande d'une longueur et d'une largeur données puis enrouler sur elle-même cette bande en déformant plus ou moins l'une de ses bordures jusqu'à refermer partiellement (figure 9), ou totalement éventuellement avec chevauchement (figure 10), l'équivalent d'anneau aplati ainsi constitué, en réservant toujours à l'intérieur de cet anneau l'orifice 35 recherché.

Sur la figure 11, on a représenté un exemple d'application du filet chauffant en collerette de l'invention au cas du soudage bout à bout de deux tubes 51, 53 coaxiaux et sensiblement de même diamètre.

Notamment dans une application gazière, les tubes seront avantageusement réalisés en une matière thermofusible ou thermoplastique, telle que du polyéthylène.

Habituellement, dans la technique connue, telle que notamment décrite dans le facicule de document DVS 2207 partie 1 (ISBN : 2-85701-178-4, édité et publié par les publications de la Soudure Autogène), le soudage coaxial de deux tels tubes s'effectuent à l'aide d'un "miroir chauffant" :

Les deux extrémités de tubes en regard à assembler sont placées entre les mors d'une machine qui dressent leurs faces d'extrémités en regard, perpendiculairement à leur axe, aligne ces extrémités puis écarte lesdits tubes ou les rapproche.

Une telle machine comporte un outil chauffant (souvent donc appelé miroir) qui apporte l'énergie calorifique nécessaire au soudage.

Après avoir aligné les deux tubes et dressé leurs extrémités à l'aide d'un outil appelé "rabot", l'opérateur intercale entre eux le miroir en question dont les faces présentent une température régulée, par exemple de l'ordre de 200 à 300° C.

Les extrémités des tubes sont alors appliquées sur les faces du miroir avec une certaine pression et pendant un temps suffisant pour que la matière plastique de ces tubes chauffe et se fluidifie jusqu'à former deux bourrelets.

L'opérateur écarte alors rapidement les deux tubes, retire le miroir, rapproche et presse les extrémités de tubes l'une contre l'autre en les maintenant ainsi jusqu'au refroidissement.

Pendant ce temps, les deux bourrelets finissent de se former.

Etant donné que de nombreux facteurs interviennent en pratique pour rendre délicate la réalisation d'une bonne soudure, l'invention propose de remplacer la machine à miroir par l'une des formes de réalisation de la résistance en collerette imaginée.

Ainsi, sur la figure 11, a-t-on intercalé entre les deux tubes 51, 53 à souder la collerette résistive 30 de manière que son axe de couronne 30a soit sensiblement confondu avec l'axe commun des deux tubes.

En pratique, la largeur l de la couronne 30 sera au moins légèrement inférieure à l'épaisseur e des tubes, de manière à éviter que ladite collerette déborde vers l'extérieur ou vers l'intérieur de la surface de ces tubes une fois ceux-ci soudés l'un à l'autre.

Pour réaliser le soudage, on peut conseiller, après avoir dressé les faces en regard 51a, 53a des tubes, de venir plaquer le filet 30 par exemple contre la face 51a en faisant coïncider l'orifice 35 du filet avec celui du tube, les deux diamètres coïncidant sensiblement.

Après quoi, on rapprochera coaxialement les tubes jusqu'à ce que le filet 30 se trouve étroitement serré entre eux et on viendra alimenter électriquement le filet, via ses extrémités de fil 33a, 33b alors correctement raccordées à la source de puissance adaptée, tel qu'un générateur de courant continu.

Echauffées jusqu'à fusion, les deux extrémités proximales des tubes imbriqueront leur matière à travers les mailles du filet, assurant ainsi le soudage recherché après arrêt du chauffage puis refroidissement.

Sur les figures 12 et 13, on a figuré une seconde application privilégiée de l'invention à l'électrosoudage d'une canalisation et d'une prise de branchement (du type général déjà décrit en référence à la figure 1).

Ainsi, sur la figure 12, voit-on représenté en perspective le filet en collerette de l'invention qui peut par exemple correspondre à la collerette 30 sensiblement plane de la figure 7C que l'on a courbée ou cintrée de manière qu'elle présente une forme sensiblement hémi-cylindrique, avec en partie centrale supérieure son orifice transversal 35.

Bien entendu, la représentation de la figure 13, où l'on voit un tel filet cintré en place dans la partie en forme de selle 32 de la prise de branchement 10, est très proche, dans son illustration, de la figure 1, d'autant plus que sur les deux figures, le perçage transversal (respectivement 11 et 110) de la canalisation a été effectué. On remarquera la disposition du filet 30 noyé à proximité immédiate de la surface intérieure concave 32a de chevauchement de la selle, avec son axe de cylindre parallèle à celui de cette selle et son axe d'orifice 35 confondu avec celui du passage 70 du fût 60 et du perçage 110.

En fait, ce qui différencie essentiellement les deux figures est bien entendu que dans le cas de la figure 13, la résistance 30 présentait d'emblée (avant perçage) son orifice 35 en regard du passage 70 dudit fût 60, la section d de cet orifice ayant bien entendu été choisie de préférence au moins légèrement supérieure à la section de la tête de perçage du perforateur.

De cette manière, le centre de l'anneau chauffant permettra le libre passage du perforateur, et une zone "froide" sera ainsi créée autour de la zone de communication des pièces. Et il sera plus aisé de s'assurer de l'étanchéité du soudage entre la prise de branchement et la canalisation 50.

Bien entendu, on aurait pu utiliser la collerette à couronne doublée de la figure 8C, qui pourrait encore augmenter l'homogénéité du chauffage.

Il doit être clair que l'invention demeurerait applicable dans une application où le filet en collerette serait disposé non pas dans la prise de branchement mais entre celle-ci et la canalisation.

## Revendications

1. Procédé pour réaliser une résistance de chauffage sous la forme d'un filet à fil(s) électriquement conducteur(s) pour le soudage entre eux d'éléments (10, 50 ; 51, 53) en matière plastique, ledit filet présentant une forme aplatie sensiblement en collerette réservant à l'intérieur un orifice, avec une continuité électrique dans tout le filet, dans lequel on réalise les étapes suivantes :
- obtention dudit filet sous la forme d'une bande ayant une longueur et une largeur données ou d'un tronçon de tube cylindrique présentant un axe, et
- pliage, soit de la bande en l'enroulant sur elle-même, soit du tronçon en l'écrasant sur lui-même suivant son axe de cylindre, jusqu'à obtenir ladite forme du filet en collerette aplatie avec son orifice.

2. Filet obtenu selon le procédé de la revendication 1, caractérisé en ce que qu'il est constitué d'un fil (31) unique.

3. Filet selon la revendication 2 ou obtenu selon le procédé de la revendication 1, caractérisé en ce que ledit fil est recouvert d'une couche (41) en matière thermiquement conductrice, électriquement isolante jusqu'à une température de l'ordre de 300 à 350 °C.

4. Utilisation du filet selon l'une quelconque des revendications 2 ou 3 ou du filet obtenu par la mise en oeuvre du procédé selon la revendication 1, pour le soudage bout à bout de deux tubes (51, 53) en matière thermoplastique sensiblement coaxiaux, entre deux extrémités (51a, 53a) en regard desquels est interposé ledit filet (30) avec son axe de collerette (30a) sensiblement confondu avec l'axe des tubes, ledit filet étant raccordé à une source électrique (21) pour y faire circuler un courant d'une intensité suffisante pour élever, dans l'environnement du filet, la température des tubes jusqu'à une température déterminée propre à induire leur soudage.

5. Ensemble comprenant:
- un filet selon l'une des revendications 2 ou 3, ou obtenu par la mise en oeuvre du procédé selon la revendication 1, et
- deux tubes (51, 53) en matière thermoplastique soudés l'un à l'autre bout à bout par deux de leurs extrémités, avec interposition entre eux dudit filet en forme de collerette, disposé sensiblement coaxialement aux tubes (51, 53).

6. Ensemble comprenant:
- une prise de branchement (10) à disposer autour d'une partie de d'une canalisation (50) et comportant un passage intérieur (70) propre à faire communiquer ladite canalisation avec une autre conduite raccordée à la prise, à travers un perçage (110) à ménager transversalement dans la paroi de la canalisation, et
- une résistance de chauffage comprenant un filet à fil(s) électriquement conducteur(s) à interposer entre la canalisation (50) et la prise de branchement (10) pour réaliser la soudure entre elles,
caractérisé en ce que ledit filet est obtenu par la mise en oeuvre du procédé selon la revendication 1, ou possède les caractéristiques des revendications 2 ou 3, ladite structure en collerette du filet comprenant deux couronnes superposées dont l'axe est sensiblement confondu avec celui du passage intérieur (70) de la prise, l'orifice de ladite collerette possédant une section supérieure à celle dudit passage intérieur (70).

7. Prise de branchement électrosoudable comportant un passage intérieur (70) et présentant une partie en forme de selle (32) ayant une surface intérieure concave destinée à venir chevaucher une canalisation (50) pour être soudée à elle par l'intermédiaire d'une résistance de chauffage (30) comprenant un filet à fil(s) électriquement conducteur(s) noyé à proximité de ladite surface intérieure concave (32a) de chevauchement de la selle, caractérisée en ce que ledit filet est obtenu par la mise en oeuvre du procédé selon la revendication 1, ou possède les caractéristiques des revendications 2 ou 3, ladite structure en collerette du filet comprenant deux couronnes superposées dont l'axe est sensiblement confondu avec celui du passage intérieur (70), l'orifice de ladite collerette possédant une section supérieure à celle du passage intérieur (70).

## Patentansprüche

1. Verfahren zur Herstellung eines Heizwiderstands in Form eines Gitters aus elektrisch leitendem Draht / leitenden Drähten zum Verschweißen mit Kunststoffteilen (10, 50 ; 51, 53), wobei das Gitter eine abgeflachte, im wesentlichen kragenförmige Form mit innerer Öffnung aufweist, und wobei im gesamten Gitter eine elektrische Kontinuität herrscht, bei welchem folgende Schritte ausgeführt werden:
- Herstellung des Gitters in Form einer Bahn mit gegebener Länge und Breite oder in Form eines zylindrischen Rohrstücks mit einer Achse, und
- Biegen der Bahn durch Aufwickeln, oder des Rohrstücks durch Zusammendrücken entlang der Zylinderachse, bis zum Erhalt der abgeflachten, kragenförmigen Form des Gitters mit seiner Öffnung.

2. Gitter, hergestellt nach dem Verfahren gemäß Anspruch 1, dadurch gekennzeichnet, daß es aus einem einzigen Draht (31) besteht.

3. Gitter nach Anspruch 2, oder hergestellt nach dem Verfahren gemäß Anspruch 1, dadurch gekennzeichnet, daß der Draht mit einer Schicht (41) aus wärmeleitendem Material überzogen ist, das elektrisch bis zu einer Temperatur im Bereich von 300 bis 350°C isolierend ist.

4. Verwendung des Gitters nach Anspruch 2 oder 3, oder welches mittels Durchführung des Verfahrens gemäß Anspruch 1 hergestellt ist, zum stoßseitigen Verschweißen zweier, im wesentlichen koaxialer Rohre (51, 53) aus thermoplastischem Material zwischen zwei Endabschnitten (51a, 53a), denen gegenüberliegend das Gitter (30) mit seiner, im wesentlichen mit der Rohrachse zusammenfallender Kragenachse (30a) angeordnet ist, wobei das Gitter an eine elektrische Quelle (21) angeschlossen ist, um darin Strom mit ausreichender Stärke fließen zu lassen, um die Temperatur der Rohre in der Umgebung des Gitters bis zu einer bestimmten, ihre Verschweißung einleitende Temperatur zu erhöhen.

5. Anordnung mit
- einem Gitter nach Anspruch 2 oder 3, oder einem Gitter, welches mittels Durchführung des Verfahrens gemäß Anspruch 1 hergestellt ist, und mit
- zwei Rohre (51, 53) aus thermoplastischem Material, die stoßseitig an ihren beiden Endabschnitten miteinander verschweißt sind unter Zwischenlagerung des kragenförmigen Gitters, welches im wesentlichen koaxial zu den Rohren (51, 53) angeordnet ist.

6. Anordnung mit
- einer Anschlußstelle (10) zum Anlegen um einen Teil einer Kanalisation (50) herum, wobei die Anschlußstelle einen Innendurchgang (70) aufweist zur Verbindung der Kanalisation mit einer weiteren Leitung, die an der Anschlußstelle angeschlossen ist, durch eine quer in die Kanalisationswand versehene Bohrung (110) hindurch, und mit
- einem Heizwiderstand mit einem Gitter aus elektrisch leitendem Draht / leitenden Drähten, zum Einlegen zwischen eine Kanalisation (50) und der Anschlußstelle (10), um diese miteinander zu verschweißen,
dadurch gekennzeichnet, daß das Gitter mittels Durchführung des Verfahrens gemäß Anspruch 1 hergestellt ist, oder die Merkmale des Anspruchs 2 oder 3 aufweist, wobei die kragenförmige Struktur des Gitters zwei übereinander angeordnete Kränze umfaßt, deren Achse im wesentlichen mit der des Innendurchgangs (70) der Anschlußstelle zusammenfällt, wobei die Öffnung des Kragens einen größeren Querschnitt als der Innendurchgang (70) aufweist.

7. Elektrisch verschweißbare Anschlußstelle mit einem Innendurchgang (70) und einem sattelförmigen Teil (32), das eine gewölbte Innenfläche zur Überlappung der Kanalisation (50) aufweist, um sie mit dieser mittels einem Heizwiderstand (30) zu verschweißen, welcher ein Gitter aus elektrisch leitendem Draht / leitenden Drähten enthält, das nahe der zur Überlappung des Sattels gewölbten Innenfläche (32a) eingebettet ist, dadurch gekennzeichnet, daß das Gitter mittels Durchführung des Verfahrens gemäß Anspruch 1 hergestellt ist, oder die Merkmale des Anspruchs 2 oder 3 aufweist, wobei die kragenförmige Struktur des Gitters zwei übereinander angeordnete Kränze aufweist, deren Achse im wesentlichen mit der des Innendurchgangs (70) zusammenfällt, und wobei die Öffnung des Kragens einen größeren Querschnitt als der Innendurchgang (70) aufweist.

## Claims

1. Method for producing a heating resistance in the form of a net of electrically conductive wire(s) for welding plastics material elements (10,50; 51,53) to one another, said net having a plane shape substantially in the form of a small collar delimiting, at the interior, an aperture, with electrical continuity in the whole of the net, in which the following steps are performed:
- obtaining said net in the form of a strip having a given length and width or of a section of cylindrical tube having an axis; and
- folding, either of the strip in rolling it up about itself, or of the section in deforming it on itself along the axis of its cylinder until said shape of the net, in the form of a plane small collar with its aperture, is obtained.

2. Net obtained according to the method in Claim 1, characterised in that it is formed of a single wire (31).

3. Net according to Claim 2 or obtained according to the method in Claim 1, characterised in that said wire is covered with a layer (41) of thermally conductive material, electrically insulating up to a temperature of the order of 300 to 350°C.

4. Application of the net according to either one of Claims 2 or 3 or of the net obtained by performing the method according to Claim 1, for the end-to-end welding of two substantially coaxial tubes (51,53) of thermoplastics material, between two ends (51a, 53a), facing which said net (30) is interposed with the axis of its small collar (30a) substantially aligned with the axis of the tubes, said net being connected to an electrical source (21) to cause a current to circulate therein, the intensity of which current is sufficient to increase the temperature, in the vicinity of the net, of the tubes up to a predetermined temperature which is appropriate to induce the welding thereof.

5. Assembly comprising:
- a net according to either Claim 2 or Claim 3, or obtained by performing the process according to Claim 1, and
- two tubes (51,53) of thermoplastics material welded to one another end to end at two of their ends, with interposition, between them, of said net in the form of a small collar, arranged substantially coaxially to the tubes (51,53).

6. Assembly comprising:
- a branch connector (10) for arranging around one part of a duct (50) and comprising an inner passage (70) suitable for bringing said duct into communication with another duct which is connected to the connector, through a bore (110) which is to be provided transversely in the wall of the duct; and
- a heating resistance comprising a net with electrically conductive wire(s) to be interposed between the duct (50) and the branch connector (10) to produce the weld between them, characterised in that said wire is obtained by performing the process according to Claim 1, or has the characteristics of Claims 2 or 3, said small collar-shaped structure of the net comprising two superimposed collars the axis of which is substantially aligned with that of the inner passage (70) of the connector, the aperture of said small collar having a section which is greater than that of said inner passage (70).

7. Electroweldable branch connector comprising an inner passage (70) and having a part in the form of a saddle (32) having a concave inner surface intended to overlap a duct (50) to be welded thereto by means of a heating resistance (30) comprising a net with electrically conductive wire(s) embedded in the vicinity of said concave inner overlapping surface (32a) of the saddle, characterised in that said net is obtained by the use of the process according to Claim 1, or has the characteristics of Claims 2 or 3, said small collar-shaped structure of the net comprising two superimposed collars the axis of which is substantially aligned with that of the inner passage (70), the section of the aperture of said small collar being greater than that of the inner passage (70).
